# EUROPEAN PATENT APPLICATION

(11) **EP 4 468 570 A1**
(43) Date of publication of application: **27.11.2024**
(21) Application number: 22922069.4
(22) Date of filing: 24.11.2022
(51) Int. Cl.: H02K 3/46, H02K 3/04, H02K 15/04, H02K 15/12

(54) **ROTARY ELECTRIC MACHINE AND INDUSTRIAL MACHINE**

(30) Priority: 20.01.2022 JP 2022006870
(71) Applicant: Hitachi Industrial Equipment Systems Co., Ltd., Tokyo 101-0021 (JP); Hitachi, Ltd., Tokyo 100-8280 (JP)
(72) Inventor: IKEDA Kenji, Tokyo 100-8280 (JP); TOKOI Hirooki, Tokyo 100-8280 (JP); ENOMOTO Yuji, Tokyo 100-8280 (JP); MURAKI Takahito, Tokyo 100-8280 (JP); HASEGAWA Yu, Tokyo 100-8280 (JP); MIKAMI Hiroyuki, Tokyo 101-0021 (JP); SAKAI Toru, Tokyo 101-0021 (JP); SUZUKI Toshifumi, Tokyo 101-0021 (JP); AMAIKE Masaru, Tokyo 101-0021 (JP)
(74) Representative: MERH-IP Matias Erny Reichl Hoffmann Patentanwälte PartG mbB
(86) International application number: PCT/JP2022/043321
(87) International publication number: WO 2023/139918

(57) **Abstract**

The present invention includes: a stator core (21) having a slot (21a); a bobbin (22) fitted in the slot (21a) and having a through hole (22c) penetrating in an axial direction of the stator core (21); a coil (23) inserted in the through hole (22c); a plurality of protrusions (22e) that protrude from at least one of an inner periphery of the through hole (22c) and an outer periphery of the coil (23), and guide the position of the coil (23) in the through hole (22c); and a resin filled on the periphery of the coil (23) in the through hole (22c).

## Description

### Technical Field

The present invention relates to a rotating electric machine and an industrial machine.

### Background Art

A rotating electric machine that achieves a higher power density and a smaller size has been developed in which the winding space factor of a stator is increased by using, as conducting wires, coils that are rectangular wires having a flat sectional shape. In a rotating electric machine of Patent Document 1, divided coils are fitted to each other within the through holes of bobbins provided within slots of the stator. The rotating electric machine of Patent Document 1 thereby achieves a further reduction in size, a higher productivity, and a lower cost.

### Prior Art Document

### Patent Document

Patent Document 1: WO-A-2020/017133

### Summary of the Invention

### Problem to be Solved by the Invention

Now, there is a fear that, in the rotating electric machine, an insulating film or a bobbin covering coils may be damaged and cause a dielectric breakdown due to vibration occurring in the stator as a rotor rotates. Therefore, a rotating electric machine has been developed in which damage to the insulating film and the bobbin covering the coils is suppressed by covering the coils and the bobbin with a resin such as a molding resin or a varnish. Accordingly, the inventor et al. considered suppressing damage to the insulating film and the bobbin by covering the coils and the bobbin of the rotating electric machine of Patent Document 1 with a resin such as a molding resin or a varnish.

However, nothing, within the through hole of the bobbin, supports the coils in a radial direction and a circumferential direction of the through hole. The coils inserted within the through hole of the bobbin may therefore move in the radial direction and the circumferential direction of the through hole. There is consequently a fear that clearances formed between the outer peripheral walls of the coils and the inner peripheral wall of the bobbin may be formed nonuniformly on the peripheries of the coils. Therefore, there is a fear that the resin such as a molding resin or a varnish filled between the outer peripheral walls of the coils and the inner peripheral wall of the bobbin may be formed nonuniformly, and that a dielectric breakdown may be caused by the concentration of a stress in a part of the insulating film and the bobbin covering the coils.

It is an object of the present invention to provide a rotating electric machine that suppresses the occurrence of a dielectric breakdown due to the concentration of a stress in a part of an insulating film and a bobbin covering coils.

### Means for Solving the Problem

In order to achieve the above object, the present invention includes: a stator core having a slot; a bobbin fitted in the slot and having a through hole penetrating in an axial direction of the stator core; a coil inserted from both ends of the through hole; a plurality of protrusions protruding from at least one of an inner periphery of the through hole and an outer periphery of the coil, and guiding a position of the coil in the through hole; and a resin filled on a periphery of the coil in the through hole.

### Advantages of the Invention

According to the present invention, the occurrence of concentration of a stress in a part of an insulating film and the bobbin covering the coil can be suppressed. Thus, the occurrence of a dielectric breakdown in the insulating film and the bobbin covering the coil can be suppressed. Problems, configurations, and effects other than those described above will be made apparent by the following description of embodiments.

### Brief Description of the Drawings

FIG. 1 is a sectional perspective view illustrating a general structure of a rotating electric machine according to a first embodiment of the present invention.
FIG. 2 is a perspective view of a stator of the rotating electric machine according to the first embodiment of the present invention and a rotor disposed within the stator.
FIG. 3 is an external perspective view of a stator core according to the first embodiment of the present invention.
FIG. 4 is an external perspective view of a bobbin according to the first embodiment of the present invention.
FIG. 5 is a perspective view before a first rectangular wire and a second rectangular wire constituting one set of coils according to the first embodiment of the present invention are inserted into one of a plurality of slots of the stator core.
FIG. 6 is an enlarged perspective view illustrating a state (left side) before ends of the first rectangular wire and the second rectangular wire constituting the one set of coils according to the first embodiment of the present invention are connected to each other and a state (right side) after the ends of the first rectangular wire and the second rectangular wire are connected to each other.
FIG. 7 is an enlarged view of an A-A section in FIG. 4.
FIG. 8 is an enlarged view of sections of the bobbin according to the first embodiment of the present invention and connecting portions of coils inserted in a through hole.
FIG. 9 is a schematic diagram of a B-B section in FIG. 7.
FIG. 10 is an enlarged view of sections of a bobbin according to another embodiment of the present invention and the connecting portions of the coils inserted in the through hole.
FIG. 11 is an enlarged view of sections of a bobbin according to another embodiment of the present invention and the connecting portions of the coils inserted in the through hole.
FIG. 12 is a sectional enlarged view taken along a line A-A in a case where FIG. 4 is used as an external perspective view of a bobbin according to a second embodiment of the present invention.
FIG. 13 is an enlarged view of sections of the bobbin according to the second embodiment of the present invention and the connecting portions of the coils inserted in the through hole.
FIG. 14 is a sectional enlarged view taken along a line A-A in a case where FIG. 4 is used as an external perspective view of a bobbin according to a third embodiment of the present invention.
FIG. 15 is an enlarged view of sections of the bobbin according to the third embodiment of the present invention and the connecting portions of the coils inserted in the through hole.
FIG. 16 is an enlarged view of sections of a bobbin according to another embodiment of the present invention and the connecting portions of the coils inserted in the through hole.

### Modes for Carrying Out the Invention

Configurations and operations of rotating electric machines according to a first embodiment to a third embodiment of the present invention will hereinafter be described with reference to the drawings. Incidentally, in each figure, the same reference numerals denote the same parts.

### (First Embodiment)

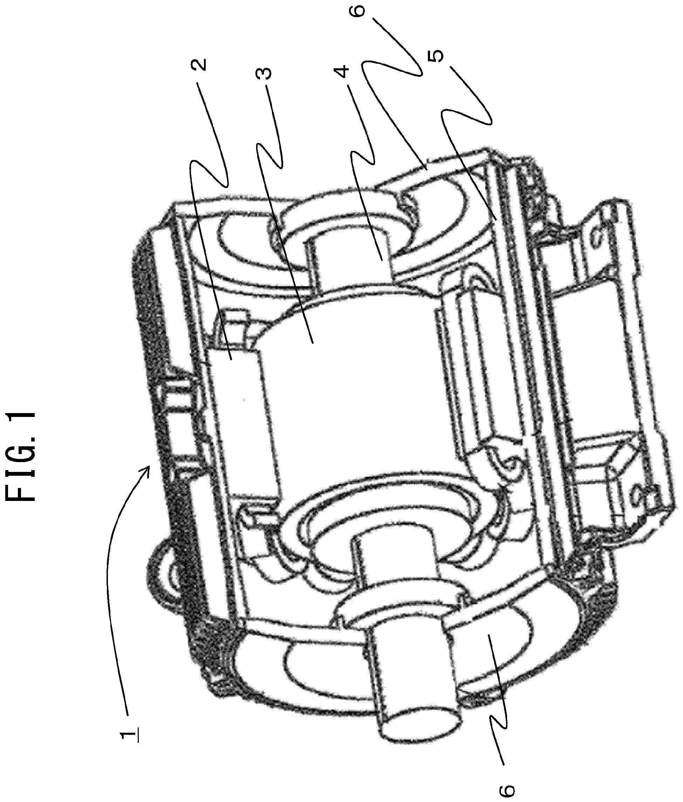

FIG. 1 is a sectional perspective view illustrating a general structure of a rotating electric machine 1 according to the first embodiment of the present invention. The rotating electric machine 1 is, for example, a radial gap type rotating electric machine of an internal rotation type, and may be used as a motor as a power source of an industrial machine, for example, a compressor. The rotating electric machine 1 is provided with a stator 2, a rotor 3, a shaft 4 that rotates together with the rotor 3, a housing 5 that covers the stator 2, and end brackets 6 that support the shaft 4.

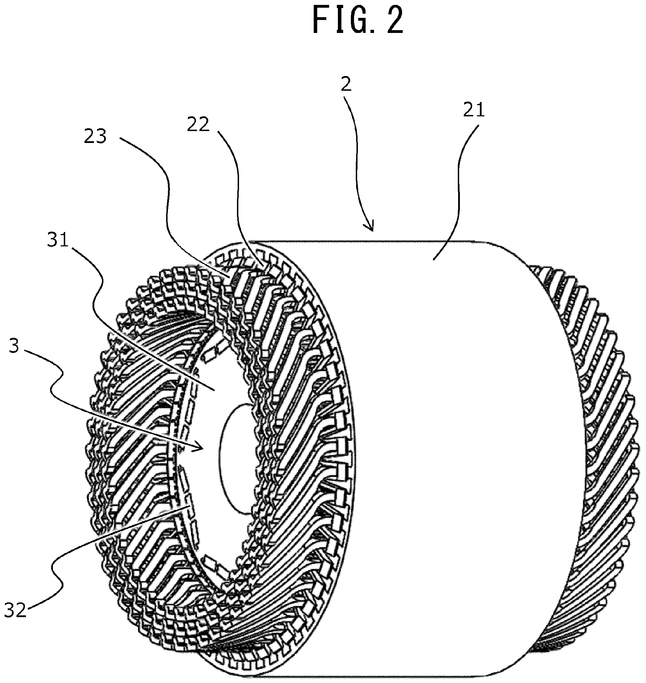

FIG. 2 is a perspective view of the stator 2 of the rotating electric machine 1 according to the present embodiment and the rotor 3 disposed within the stator 2. That is, FIG. 2 is a view obtained by omitting the shaft 4, the housing 5, and the end brackets 6 from FIG. 1. As illustrated in FIG. 2, the rotating electric machine 1 includes the stator 2 in a tubular shape and the rotor 3 in a cylindrical shape disposed within the stator 2.

The stator 2 is a part that generates a magnetic force by electric power, and thereby rotates the rotor 3. As illustrated in FIG. 2, the stator 2 includes a stator core 21, a plurality of bobbins 22, and a plurality of sets of coils 23. The rotor 3 is a part that is rotated by the magnetic force originating from the stator 2. The rotor 3 includes a rotor core 31 and a plurality of permanent magnets 32 fitted in a plurality of respective through holes provided in the rotor core 31.

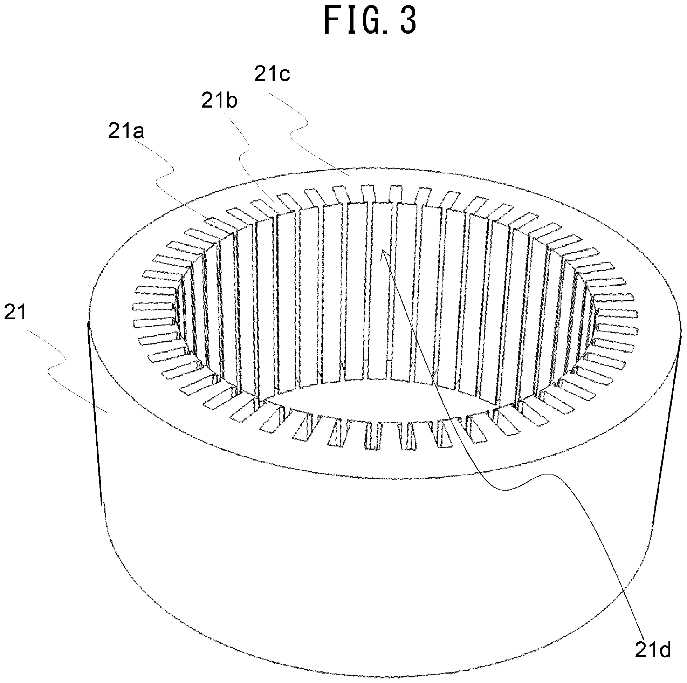

FIG. 3 is an external perspective view of the stator core 21 according to the present first embodiment. The stator core 21 is an iron core that forms magnetic paths in which a magnetic flux generated by feeding electricity to the plurality of sets of coils 23 is passed to the rotor 3. Incidentally, the stator core 21 is preferably formed by stacking electromagnetic steel sheets, for example, in order to suppress the occurrence of an eddy current.

As illustrated in FIG. 3, a plurality of slots 21a penetrating in the axial direction of the stator core 21 are formed in the stator core 21. A bobbin 22 is fitted into each of the plurality of slots 21a. A plurality of sets of coils 23 are inserted into the bobbin 22.

In addition, the stator core 21 includes a plurality of teeth portions 21b that form a magnetic path in a radial direction and an annular back yoke portion 21c that forms a magnetic path in a circumferential direction. Incidentally, the plurality of teeth portions 21b and the back yoke portion 21c may be separated from each other, and the teeth portions 21b may be formed by laminating together trapezoidal thin plates, for example, iron-base amorphous metal thin plates.

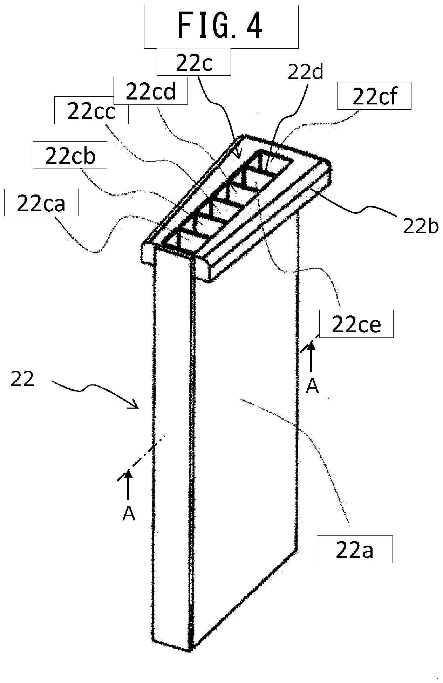

FIG. 4 is an external perspective view of a bobbin 22 according to the present embodiment. The bobbin 22 is a part fitted into a slot 21a to insulate coils 23 within the bobbin 22 from the stator core 21. As illustrated in FIG. 4, the bobbin 22 includes: a tubular portion 22a that covers the coils 23; a flange portion 22b that positions the bobbin 22 in the stator core 21; and a through hole 22c into which the coils 23 are inserted.

The through hole 22c is a hole penetrating in the axial direction of the stator core 21 in the bobbin 22 fitted in the slot 21a. The through hole 22c according to the present embodiment is surrounded by inner peripheral surfaces along inner walls of the slot 21a, and has a shape longer in the radial direction of the stator core 21 than in the circumferential direction of the stator core 21. It is to be noted that the through hole 22c is not limited to the above-described form, but may be another shape, and that a plurality of through holes 22c may be provided.

The through hole 22c may have a plurality of sets of coils 23 arranged in the radial direction of the stator core 21. Moreover, a partition plate 22d may be provided between two adjacent sets of coils 23 among the plurality of sets of coils 23. Therefore, a plurality of insertion holes (six insertion holes 22ca to 22cf in the present embodiment) are formed in the through hole 22c according to the present embodiment, and one set of coils 23 is disposed in each of the plurality of insertion holes 22ca to 22cf.

Usable as materials for the bobbin 22 are, for example, resins such as a liquid crystalline resin, a PPS resin, a POE resin, an aramid resin, a polyimide resin, a polyester resin, a PE resin, a PP resin, and an epoxy resin, and two kinds thereof may be used in combination with each other. In addition, a filler such as an inorganic filler, an organic filler, an inorganic fiber, or an organic fiber may be mixed and used. Among these, a liquid crystalline resin or a liquid crystalline resin mixed with a filler is particularly preferable from a viewpoint of dimensional accuracy, a mechanical property, and a thermal property.

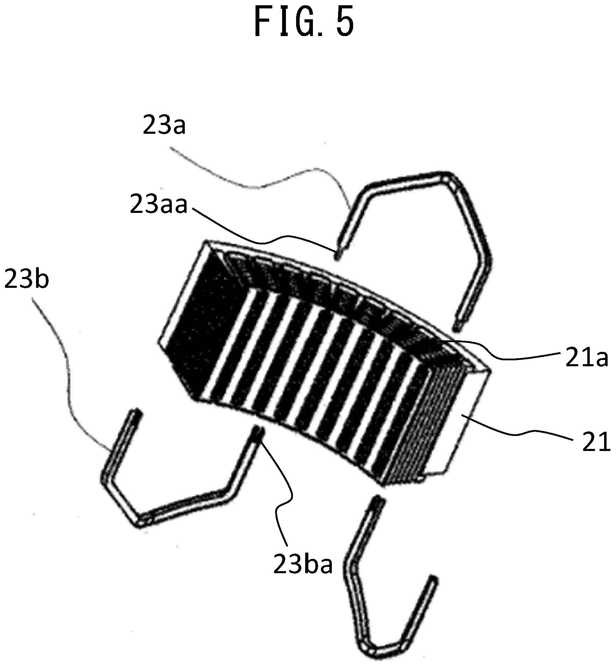

FIG. 5 is a perspective view before a first rectangular wire 23a and a second rectangular wire 23b constituting one set of coils 23 according to the present embodiment are inserted into one of the plurality of slots 21a of the stator core 21.

One set of coils 23 is, for example, formed by two rectangular wires (the first rectangular wire 23a and the second rectangular wire 23b) in a U-shape. Moreover, a ridge portion 23aa, for example, is provided to an end of the first rectangular wire 23a, and a groove portion 23ba, for example, is provided to an end of the second rectangular wire 23b.

The first rectangular wire 23a and the second rectangular wire 23b are inserted from both ends of an insertion hole 22ca to 22cf provided in the through hole 22c provided to a bobbin 22 fitted in each of the plurality of slots 21a of the stator core 21.

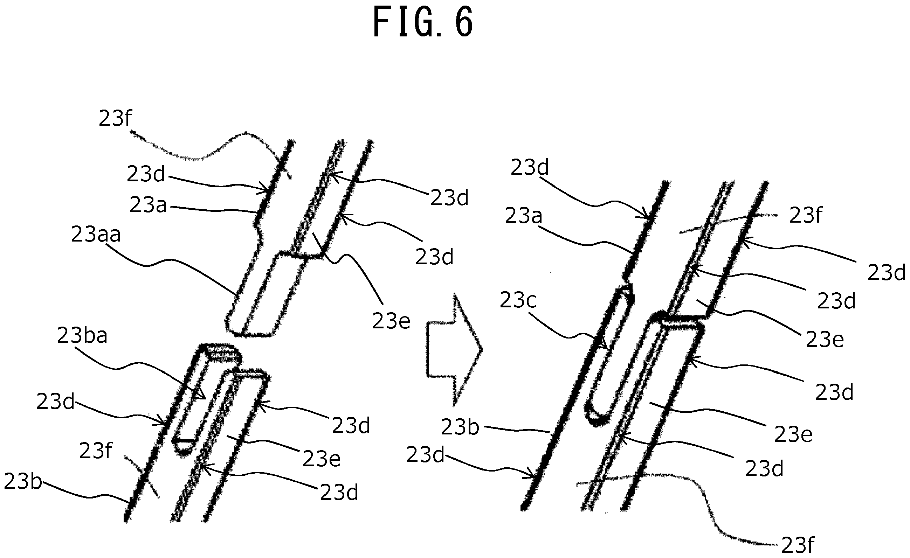

FIG. 6 is an enlarged perspective view illustrating a state (left side) before ends of the first rectangular wire 23a and the second rectangular wire 23b constituting one set of coils 23 according to the present embodiment are connected to each other and a state (right side) after the ends of the first rectangular wire 23a and the second rectangular wire 23b are connected to each other. The first rectangular wire 23a and the second rectangular wire 23b inserted in both ends of each of the insertion holes 22ca to 22cf are connected to each other by fitting the ridge portion 23aa into the groove portion 23ba within the bobbin 22. A connecting portion 23c is formed in one set of coils 23 by fitting the ridge portion 23aa into the groove portion 23ba. The first rectangular wire 23a and the second rectangular wire 23b are consequently electrically connected to each other and physically coupled to each other.

One set of coils 23 is inserted in each of the insertion holes 22ca to 22cf provided in the through hole 22c of the bobbin 22 fitted in each of the plurality of slots 21a, and the connecting portions 23c of the plurality of sets of coils 23 are formed within the bobbin 22. Thus, as illustrated in FIG. 2, the plurality of sets of coils 23 are wound in the stator core 21.

A plurality of protrusions for guiding the position of one set of coils 23 in the through hole 22c protrude from the inner periphery of the through hole 22c or the outer periphery of the one set of coils 23. The plurality of protrusions are preferably at least three protrusions in order to hold the one set of coils 23. For example, each of the at least three protrusions may be protruded to the one set of coils 23 such that the at least three protrusions abut against the outer periphery of the one set of coils 23 from the inner periphery of the through hole 22c. In addition, each of the at least three protrusions may be protruded to the inner periphery of the through hole 22c such that the at least three protrusions abut against the inner periphery of the through hole 22c from the outer periphery of the one set of coils 23. Incidentally, in a case where the at least three protrusions are three protrusions, in order to fix the position of the one set of coils 23 in the through hole 22c, the three protrusions are preferably arranged such that a triangle having the three protrusions as vertices thereof is an acute triangle in which the center of gravity of the triangle is located within the triangle. This is because in a case where the triangle having the three protrusions as vertices thereof is a right triangle or an obtuse triangle, the center of gravity is located on a longest side or on the outside of the longest side, and thus the coils 23 may be moved in the direction of the longest side.

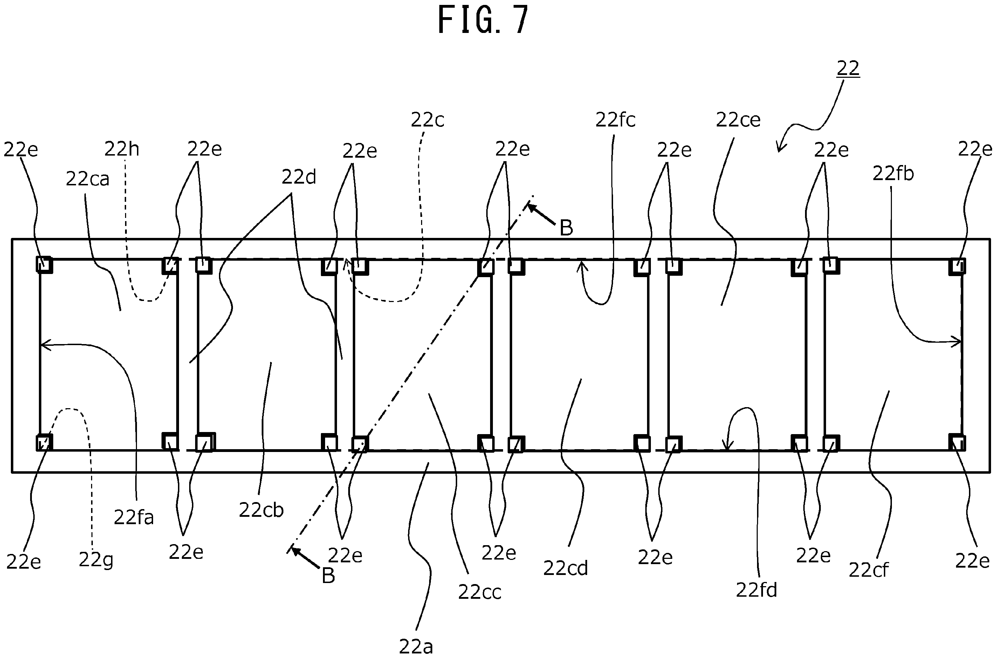

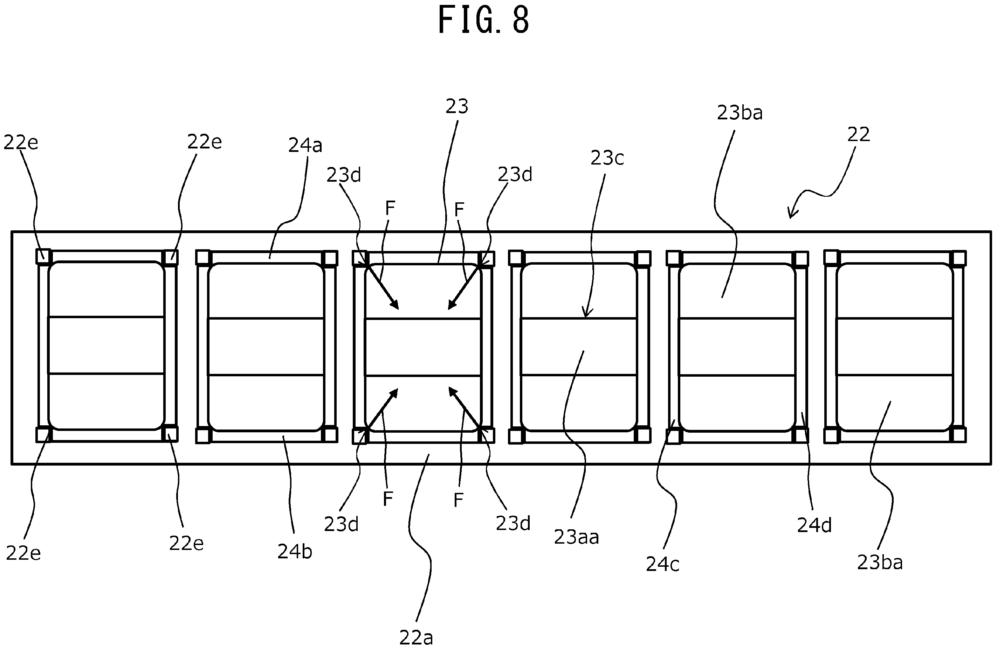

FIG. 7 is a sectional enlarged view taken along a line A-A in FIG. 4. As illustrated in FIG. 7, protrusions 22e are provided at four corners of each of the plurality of insertion holes 22ca to 22cf. The protrusions 22e have ends 22ea protruding toward the center of each of the plurality of insertion holes 22ca to 22cf. In addition, FIG. 8 is an enlarged view of sections of the bobbin 22 according to the present embodiment and the connecting portions of the coils 23 inserted in the through hole 22c. As illustrated in FIG. 8, the plurality of protrusions 22e are provided so as to guide the positions of the plurality of sets of coils 23 inserted in the plurality of insertion holes 22ca to 22cf provided in the through hole 22c. Incidentally, in order to fix the position of the one set of coils 23 in the through hole 22c, each of the four protrusions 22e is preferably disposed such that each of four pressing forces F pressing the one set of coils 23 by the four respective protrusions 22e is directed to one position of the one set of coils 23.

For example, as illustrated in FIG. 7, rectangular wires are used as one set of coils 23, and the plurality of protrusions 22e are (at least) four protrusions 22e. Moreover, the four protrusions 22e may be respectively arranged in the through hole 22c so as to face four respective edges 23d of the one set of coils 23, the edges 23d extending in the axial direction of the stator core 21.

In addition, as illustrated in FIG. 7, for example, the through hole 22c may be formed by four or more flat surfaces (four flat surfaces 22fa to 22fd in the present embodiment) that are continuous with each other in the inner circumferential direction of the through hole 22c. Moreover, the plurality of protrusions 22e may be provided at a corner 22g at which two flat surfaces adjacent to each other among the four or more flat surfaces intersect each other and a corner 22h at which one of the four or more flat surfaces and a partition plate 22d intersect each other. Incidentally, in the present embodiment, the two flat surfaces adjacent to each other among the four or more flat surfaces 22fa to 22fd are the flat surface 22fa and the flat surface 22fc, the flat surface 22fa and the flat surface 22fd, the flat surface 22fb and the flat surface 22fc, or the flat surface 22fb and the flat surface 22fd. In addition, the flat surface that intersects the partition plate 22d among the four or more flat surfaces 22fa to 22fd is the flat surface 22fc or 22fd.

Consequently, gaps are formed on the peripheries of the connecting portions 23c of the coils 23, as illustrated in FIG. 8. Moreover, resins 24a to 24d are filled into the gaps by mold processing, for example, and seal the connecting portions 23c of the coils 23. That is, the through hole 22c is provided with a resin 24 filled on the peripheries of the connecting portions 23c. Incidentally, a varnish may be used as the resin 24. Usable as the resin 24 is, for example, a resin material obtained by mixing an additive such as an acid anhydride curing agent or an amine curing agent with a thermoplastic resin such as an unsaturated polyester resin or an epoxy resin used as a base material, and two or more kinds of resin materials can also be used in combination with each other. In addition, a filler such as an inorganic filler, an organic filler, an inorganic fiber, or an organic fiber may be mixed and used. Among these, an unsaturated polyester resin or an epoxy resin, an unsaturated polyester resin or an epoxy resin mixed with a filler, or mixed resin materials including these as a base material are particularly preferable from a viewpoint of fluidity, a curing characteristic, a mechanical property, and a thermal property. In addition, the plurality of protrusions 22e may be provided to the outer periphery of the one set of coils 23 rather than to the inner periphery of the through hole 22c of the bobbin 22.

In addition, assuming that each of the insertion holes 22ca to 22cf is a through hole 22c, a plurality of through holes 22ca to 22cf are formed as the through hole 22c in the bobbin 22, and a plurality of sets of coils 23 may be inserted into the bobbin 22 by inserting one set of coils 23 into each of the plurality of through holes 22ca to 22cf. Moreover, the plurality of protrusions 22e may protrude from the respective inner peripheries of the plurality of through holes 22ca to 22cf or the respective outer peripheries of the plurality of sets of coils 23, and hold the respective connecting portions 23c of the plurality of sets of coils 23 at positions separated from the respective inner peripheries of the plurality of through holes 22c.

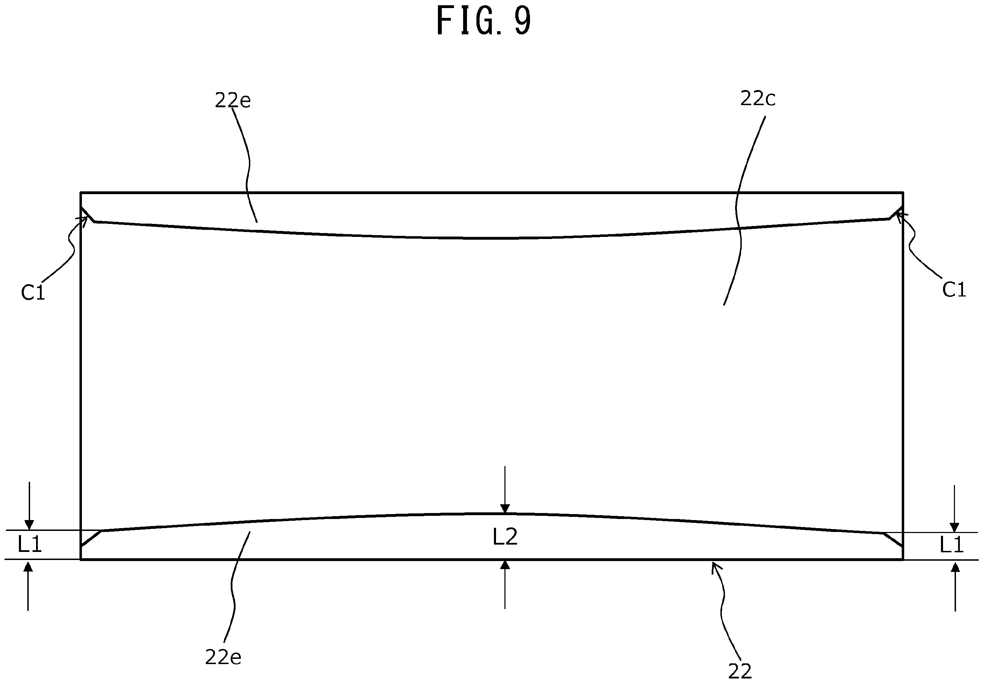

FIG. 9 is a schematic diagram of a section taken along a line B-B in FIG. 7. As illustrated in FIG. 9, as a length by which the protrusions 22e protrude toward the direction of a center of the through hole 22c, each of the plurality of protrusions 22e may have a larger length L2 in an inner part of the through hole 22c than a length L1 at openings at both ends of the through hole 22c. That is, the length by which the protrusions 22e protrude toward the direction of the center of the through hole 22c may be increased from both ends of the through hole 22c toward the direction of the inner part of the through hole 22c. In addition, as illustrated in FIG. 9, a chamfer C1 may be formed at the edges of the openings of the through hole 22c.

Incidentally, the present embodiment may be the following mode. For example, while an embodiment has been illustrated in which four protrusions 22e protrude from the inner periphery of the through hole 22c in the above description, it suffices to provide at least three protrusions from the inner periphery of the through hole 22c or the outer periphery of the one set of coils 23. In addition, in order to fix the position of the one set of coils 23 in the through hole 22c, each of the at least three protrusions is preferably disposed such that each of at least three pressing forces F pressing the one set of coils 23 by the at least three protrusions, respectively, is directed to one position of the one set of coils 23.

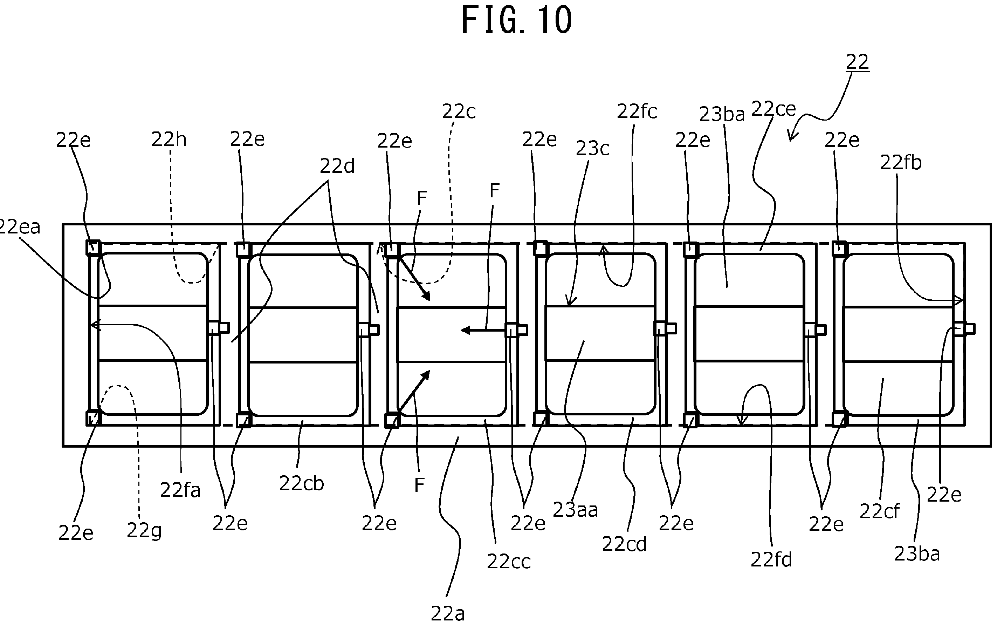

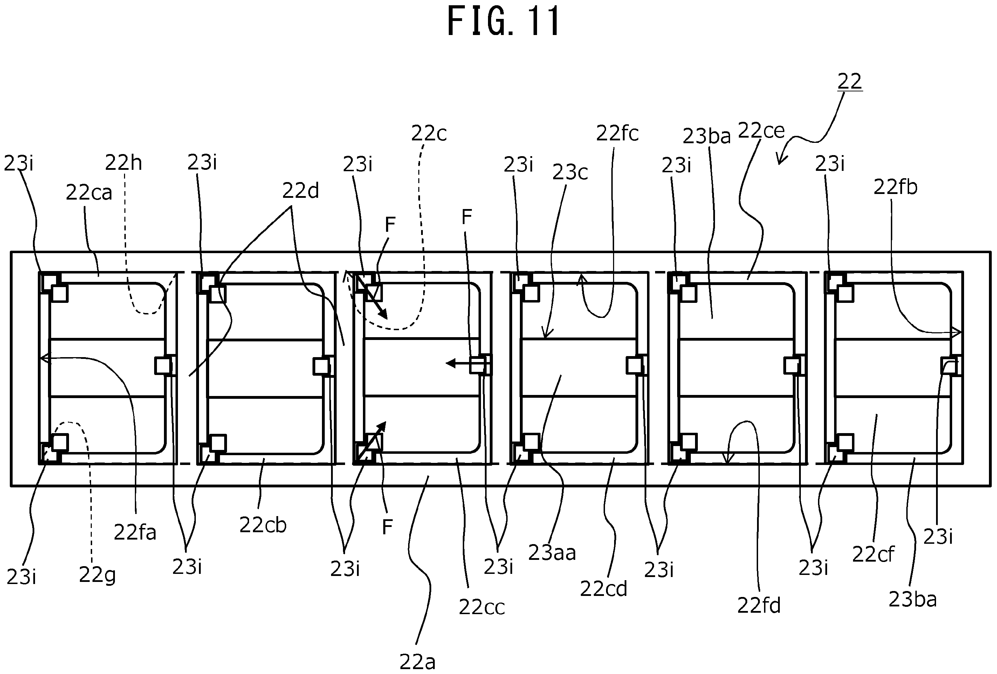

For example, as illustrated in FIG. 10, three protrusions 22e protrude from the inner periphery of the through hole 22c to the one set of coils 23, and are preferably disposed such that each of a plurality of pressing forces F pressing the one set of coils 23 by the three respective protrusions 22e is directed to one position of the one set of coils 23. In addition, as illustrated in FIG. 11, three protrusions 23i protrude from the outer periphery of the one set of coils 23 to the inner periphery of the through hole 22c, and are preferably disposed such that each of a plurality of pressing forces F pressing the one set of coils 23 by the inner peripheral surface of the through hole 22c via the three protrusions 22e is directed to one position of the one set of coils 23.

### [Effects]

The rotating electric machine 1 according to the present embodiment includes the plurality of protrusions 22e that protrude from at least one of the inner periphery of the through hole 22c of the bobbin 22 and the outer periphery of the coil 23, and guide the position of the coil 23 in the through hole 22c of the bobbin 22. The plurality of protrusions 22e function as a guide at a time of insertion of the coil 23 into the through hole 22c of the bobbin 22. It is therefore possible to control the size of gaps formed between the coil 23 and the through hole 22c by devising the position and size of the plurality of protrusions 22e. When the position and size of the protrusions 22e are controlled so as to make the size of the gaps uniform, for example, the resin 24 such as a molding resin or a varnish can be formed substantially uniformly on the periphery of the coil 23 at a time of filling the gaps with the resin 24. That is, according to the present embodiment, the plurality of protrusions 22e form inflow passages for filling the resin 24 on the periphery of the connecting portion 23c of the coil 23 within the through hole 22c and enhance an inflow property of the resin 24, and make it possible to fill the resin 24 on the periphery of the connecting portion 23c of the coil 23 uniformly. The occurrence of concentration of a stress in a part of an insulating film and the bobbin 22 covering the coil 23 can therefore be suppressed. Thus, the occurrence of a dielectric breakdown in the insulating film and the bobbin 22 covering the coil 23 can be suppressed.

In addition, in the rotating electric machine 1 according to the present embodiment, preferably, the coil 23 is one set of coils 23 having a connecting portion 23c within the bobbin 22, and the resin 24 is filled on the periphery of the connecting portion 23c in the through hole 22c. It is thereby possible to make coil ends smaller, and therefore achieve a smaller size, higher productivity, and a lower cost of the rotating electric machine 1.

In addition, as a method of cooling the rotating electric machine 1, there is a method that directly cools the stator 2 by a refrigerant (for example, a lubricating oil of the rotating electric machine 1). In this case, when there is a part without the resin 24 between the outer peripheral wall of the coil 23 and the inner peripheral wall of the bobbin 22, the refrigerant can penetrate from the part toward the connecting portion 23c of the coil 23 within the bobbin 22. The connection strength of the connecting portion 23c may be decreased when the refrigerant reaches the connecting portion 23c.

Accordingly, because the plurality of protrusions 22e function as a guide at a time of insertion of the one set of coils 23 into the through hole 22c of the bobbin 22, as described above, it is possible to suppress the formation of a part without the resin 24 on the periphery of the connecting portion 23c by devising the position and size of the plurality of protrusions 22e. Then, because it is possible to suppress the penetration of the refrigerant for cooling the stator 2 into the connecting portion 23c of the one set of coils 23 within the bobbin 22, a decrease in the connection strength of the connecting portion 23c is suppressed, so that a conduction reliability of the coils 23 can be ensured.

In addition, the plurality of protrusions 22e are preferably at least three protrusions. The one set of coils 23 can be thereby held at a predetermined position within the through hole 22c by the at least three protrusions 22e. Incidentally, in a case where the at least three protrusions are three protrusions, the three protrusions are preferably arranged such that a triangle having the three protrusions as vertices thereof is an acute triangle. Consequently, the position of the one set of coils 23 in the through hole 22c can be fixed by the three protrusions. In addition, the at least three protrusions are preferably arranged such that each of a plurality of pressing forces F pressing the one set of coils 23 is directed to one position of the one set of coils 23. Consequently, the one set of coils 23 can be fixed at a predetermined position within the through hole 22c.

In addition, the one set of coils 23 may be rectangular wires, the plurality of protrusions 22e may be at least four protrusions 22e, and the at least four protrusions 22e may be respectively arranged in the through hole 22c so as to face four respective edges 23d of the one set of coils 23, the edges 23d extending in the axial direction of the stator core 21. Consequently, the plurality of protrusions 22eg hold four corner portions of the outer periphery of the rectangular wire 23, and gaps serving as inflow passages of the resin 24 are formed between the inner periphery of the through hole 22c and the side surfaces of the rectangular wire 23. The resin 24 can therefore be filled on the periphery of the connecting portion 23c within the bobbin 22. In addition, it is possible to reduce an area of contact between the one set of coils 23 and the plurality of protrusions 22e, increase the area of the resin 24 covering the connecting portion 23c, and suppress the penetration of the refrigerant for cooling the stator 2 into the connecting portion 23c of the coil 23 within the bobbin 22.

In addition, a plurality of sets of coils 23 are arranged within the through hole 22c by plurally arranging the one set of coils 23 along the radial direction of the stator core 21. Moreover, a partition plate can be included which is provided between two sets of coils 23 adjacent to each other in the radial direction of the stator core 21 among the plurality of sets of coils 23. It is thereby possible to suppress the short-circuiting of the plurality of sets of coils 23 due to contact thereof with each other. In addition, the plurality of protrusions 22e include at least four protrusions arranged on the periphery of each of the plurality of sets of coils 23. Consequently, gaps serving as inflow passages of the resin 24 are formed on the periphery of the connecting portion 23c of each of the plurality of sets of coils 23, and the resin 24 can be filled uniformly.

In addition, the through hole 22c may be formed by four or more flat surfaces 22fa to 22fd that are continuous with each other in an inner circumferential direction of the through hole 22c, and the plurality of protrusions 22e may be provided at corners at which two flat surfaces adjacent to each other among the four or more flat surfaces 22fa to 22fd intersect each other. Incidentally, the two flat surfaces adjacent to each other in the bobbin 22 illustrated in FIG. 7 are the flat surface 22fa and the flat surface 22fc, the flat surface 22fa and the flat surface 22fd, the flat surface 22fb and the flat surface 22fc, or the flat surface 22fb and the flat surface 22fd. Consequently, each of the plurality of protrusions 22e can be enhanced in strength by being supported by the two surfaces adjacent to each other, and can strengthen a force thereof for guiding the coil 23.

In addition, the through hole 22c is formed by four or more flat surfaces 22fa to 22fd that are continuous with each other in the inner circumferential direction of the through hole 22c, and the plurality of protrusions 22e can be provided at corners at which one of the four or more flat surfaces 22fa to 22fd and a partition plate 22d intersect each other. Consequently, coupling between the partition plate 22d and the inner periphery of the through hole 22c is enhanced by the protrusions 22e, so that the strength of the partition plate 22d can be enhanced.

In addition, in the rotating electric machine 1 according to the present embodiment, assuming that each of the insertion holes 22ca to 22cf is a through hole 22c, a plurality of through holes 22ca to 22cf are formed as the through hole 22c in the bobbin 22, and a plurality of sets of coils 23 are inserted into the bobbin 22 by inserting one set of coils 23 into each of the plurality of through holes 22ca to 22cf. Moreover, the plurality of protrusions 22e may protrude from the respective inner peripheries of the plurality of through holes 22ca to 22cf or the respective outer peripheries of the plurality of sets of coils 23, and hold the respective connecting portions 23c of the plurality of sets of coils 23 at positions separated from the respective inner peripheries of the plurality of through holes 22c. Thus, when one set of coils 23 is inserted from both ends of each of the plurality of through holes 22c of the bobbin 22, the connecting portions 23c can be held at positions separated from the respective inner surfaces of the plurality of through holes 22c. Therefore, gaps serving as inflow passages of the resin 24 such as a molding resin or a varnish between the coils and the through holes are formed for the resin 24, and the resin 24 can be filled uniformly.

In addition, a length by which each of the plurality of protrusions 22e protrudes toward the direction of the center of the through hole 22c may be increased from both ends of the through hole 22c toward the direction of an inner part of the through hole 22c. That is, as illustrated in FIG. 9, the length L1 of the plurality of protrusions 22e at both ends of the through hole 22c may be shorter than the length L2 of the projections in the inner part of the through hole 22c. It is thereby possible to suppress hindrance by the plurality of protrusions 22e when ends of two coils (the first rectangular wire 23a and the second rectangular wire 23b) constituting one set of coils 23 are inserted from both ends of the through hole 22c. On the other hand, in the inner part of the bobbin 22 provided with the connecting portion 23c of the one set of coils 23, gaps serving as inflow passages of the resin 24 can be enlarged, and the resin 24 can be filled uniformly.

In addition, a chamfer C1 may be formed at the edges of the openings of the through hole 22c. Consequently, the openings of the through hole 22c are enlarged, so that ends of the coil 23 can be inserted into the through hole 22c easily. Hence, workability can be improved.

In addition, the rotating electric machine 1 according to the present embodiment can be used as a power source of an industrial machine, for example, a compressor. The industrial machine can suppress impairment of an electric connection due to penetration of the refrigerant for cooling the stator 2 into the connecting portion 23c of the coil 23 within the bobbin 22, and can thus suppress a failure caused by the rotating electric machine.

### (Second Embodiment)

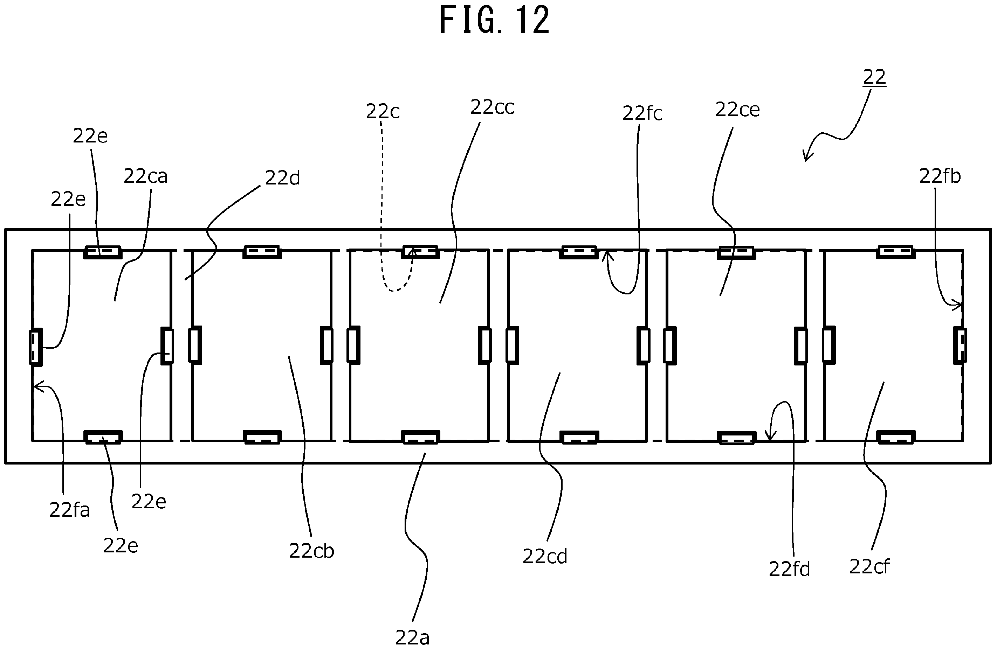

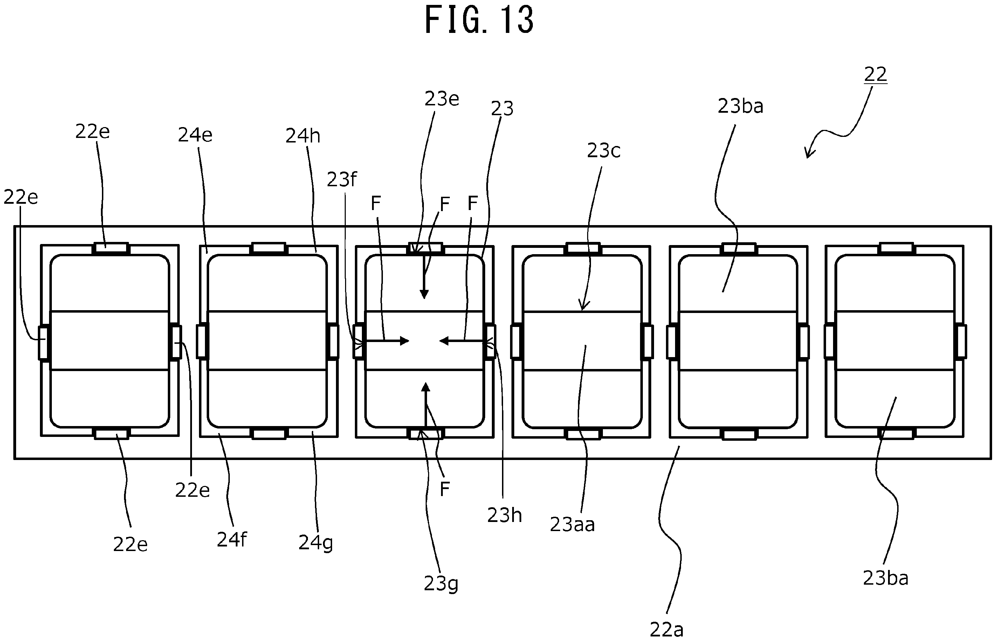

FIG. 12 is a sectional enlarged view taken along a line A-A in a case where FIG. 4 is used as an external perspective view of a bobbin according to a second embodiment of the present invention. In addition, FIG. 13 is an enlarged view of sections of the bobbin according to the second embodiment of the present invention and connecting portions of coils inserted in the through hole.

The rotating electric machine according to the present embodiment is different from the rotating electric machine 1 according to the first embodiment in terms of the position of each of the plurality of protrusions 22e protruding in the through hole 22c of the bobbin 22. Specifically, as illustrated in FIG. 13, four protrusions 22e are respectively arranged in the through hole 22c so as to face four respective side surfaces 23e to 23h of one set of coils 23. In addition, in order to fix the position of the one set of coils 23 in the through hole 22c, each of the four protrusions 22e is preferably disposed such that each of four pressing forces F pressing the one set of coils 23 by the four respective protrusions 22e is directed to one position of the one set of coils 23. Incidentally, the through hole 22c is formed by four or more flat surfaces 22fa to 22fd that are continuous with each other in the inner circumferential direction of the through hole, and one or more of the plurality of protrusions 22e may be provided to each of the four or more flat surfaces 22fa to 22fd. In addition, when there are partition plates 22d in the through hole 22c, one or more of the plurality of protrusions 22e may be provided to the four or more flat surfaces 22fa to 22fd and the partition plates 22d.

### [Effects]

As described above, in the rotating electric machine according to the present embodiment, at least four protrusions 22e may be arranged in the through hole 22c so as to face one of the four side surfaces 23e to 23h of the one set of coils 23. In addition, a plurality of protrusions 22e may be provided to the four or more flat surfaces 22fa to 22fd. In addition, when partition plates 22d are provided, a plurality of protrusions 22e may be further provided to the partition plates 22d.

It is thereby possible to suppress the disengagement of each of the plurality of protrusions 22e from guide targets (four side surfaces 23e to 23h of the one set of coils in the present embodiment). Therefore, the first rectangular wire 23a and the second rectangular wire 23b of the one set of coils 23 are easily inserted to a predetermined position in the radial direction and the circumferential direction of the through hole 22c, and can be connected to each other with high accuracy. In addition, around the connecting portion 23c of the one set of coils 23 within the bobbin 22, gaps serving as inflow passages of the resin 24 are formed by the plurality of protrusions 22e, and the resin 24 can be filled uniformly. That is, as in the first embodiment, the occurrence of concentration of a stress in a part of an insulating film and the bobbin 22 covering the coils 23 can be suppressed. Thus, the occurrence of a dielectric breakdown in the insulating film and the bobbin 22 covering the coils 23 can be suppressed. In addition, it is possible to suppress the penetration of the refrigerant for cooling the stator 2 into the connecting portion 23c of the coils 23 within the bobbin 22. Thus, a decrease in the connection strength of the connecting portion 23c is suppressed, so that a conduction reliability of the coils 23 can be ensured.

### (Third Embodiment)

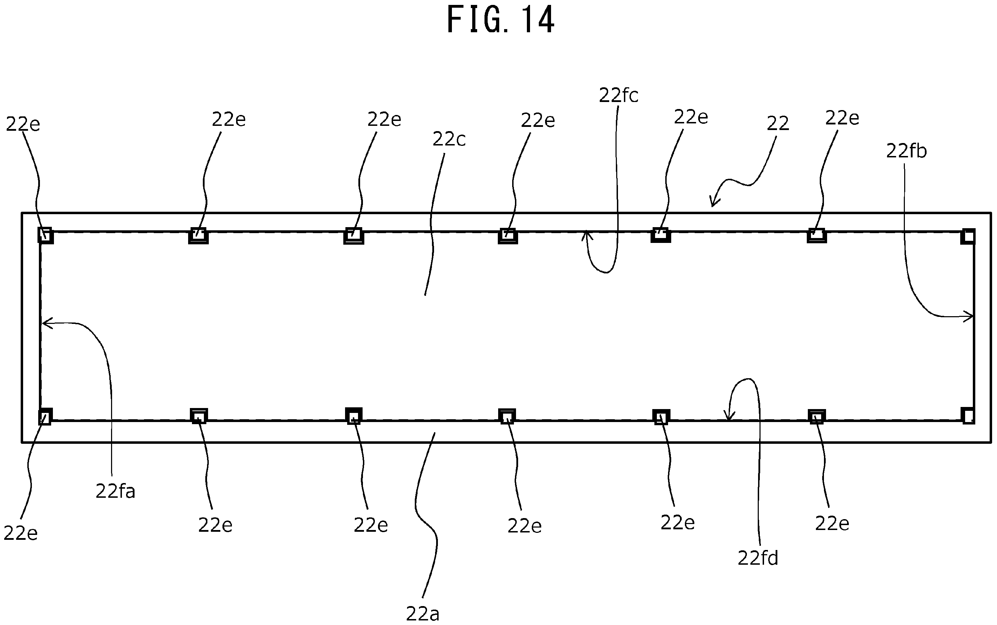

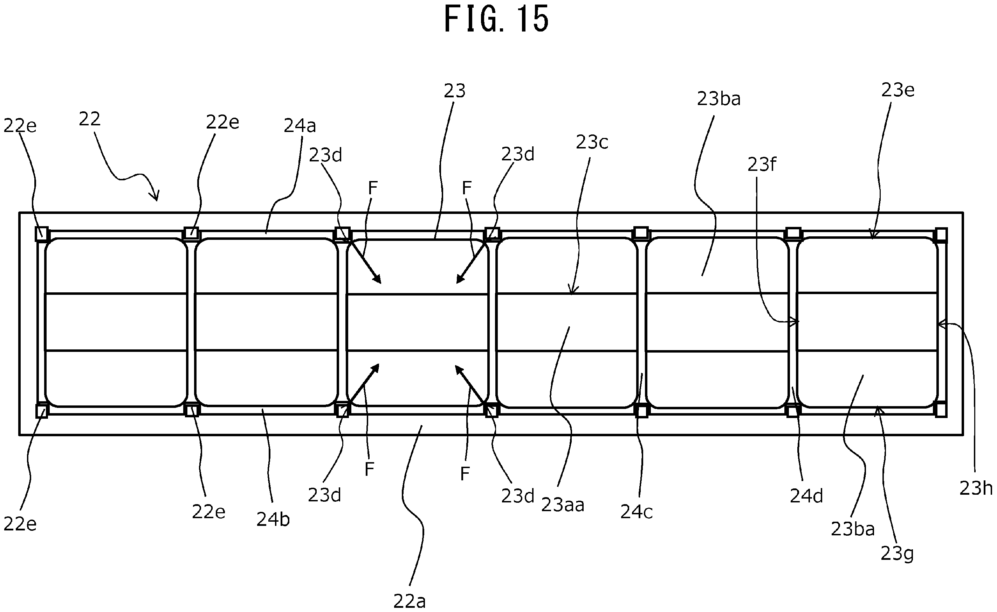

FIG. 14 is a sectional enlarged view taken along a line A-A in a case where FIG. 4 is used as an external perspective view of a bobbin according to a third embodiment of the present invention. In addition, FIG. 15 is a sectional enlarged view of the bobbin according to the third embodiment of the present invention and the connecting portions of coils inserted in the through hole.

The rotating electric machine according to the present embodiment is different from the rotating electric machine 1 according to the first embodiment in that the through hole 22c of the bobbin 22 is not provided with a partition plate 22d between two sets of coils 23 adjacent to each other among the plurality of sets of coils 23. Specifically, in the rotating electric machine according to the present embodiment, the plurality of sets of coils 23 are arranged within the through hole 22c by plurally arranging one set of coils 23 along the radial direction of the stator core 21. Moreover, two protrusions 22e among the plurality of protrusions 22e are provided between two sets of coils 23 adjacent to each other in the radial direction of the stator core 21 among the plurality of sets of coils 23. Moreover, the two protrusions 22e may be arranged so as to face two edges adjacent to each other among four edges 23d extending in the axial direction at opposed surfaces of two sets of coils 23 adjacent to each other in the radial direction of the stator core 21 among the plurality of sets of coils 23. In addition, four protrusions 22e are each preferably disposed such that each of four pressing forces F pressing the one set of coils 23 by the four respective protrusions 22e is directed to one position of the one set of coils 23.

### [Effects]

In the rotating electric machine according to the present embodiment, there is no partition plate between two sets of coils 23 adjacent to each other, and only two protrusions 22e are provided therebetween. It is therefore possible to increase the cross-sectional area of the coils 23 inserted in the through hole 22c, and thereby increase the space factor of the coils 23 within the through hole 22c of the bobbin 22.

In addition, the two sets of coils 23 adjacent to each other are held by the two protrusion 22e provided between the two sets of coils 23 adjacent to each other. It is thereby possible to reduce the number of the plurality of protrusions 22e provided to the through hole 22c in order to hold the plurality of sets of coils 23, and thus simplify the molding of the bobbin.

In addition, the two protrusions 22e form a gap serving as an inflow passage of the resin 24 between the two sets of coils 23 adjacent to each other, and the resin can be uniformly filled on the periphery of the connecting portions 23c. That is, as in the first embodiment, the occurrence of concentration of a stress in a part of an insulating film and the bobbin 22 covering the coils 23 can be suppressed. Thus, the occurrence of a dielectric breakdown in the insulating film and the bobbin 22 covering the coils 23 can be suppressed. In addition, it is possible to suppress the penetration of the refrigerant for cooling the stator 2 into the connecting portions 23c within the bobbin 22 from between the two sets of coils 23 adjacent to each other. Thus, a decrease in the connection strength of the connecting portion 23c can be suppressed, so that a conduction reliability of the coils 23 can be ensured.

It is to be noted that the present invention is not limited to the foregoing embodiments, but includes various modifications. For example, the foregoing embodiments are described in detail to describe the present invention in an easily understandable manner, and are not necessarily limited to embodiments including all of the described configurations. In addition, a part of a configuration of a certain embodiment can be replaced with a configuration of another embodiment, and a configuration of another embodiment can be added to a configuration of a certain embodiment. In addition, for a part of a configuration of each embodiment, another configuration can be added, deleted, or substituted.

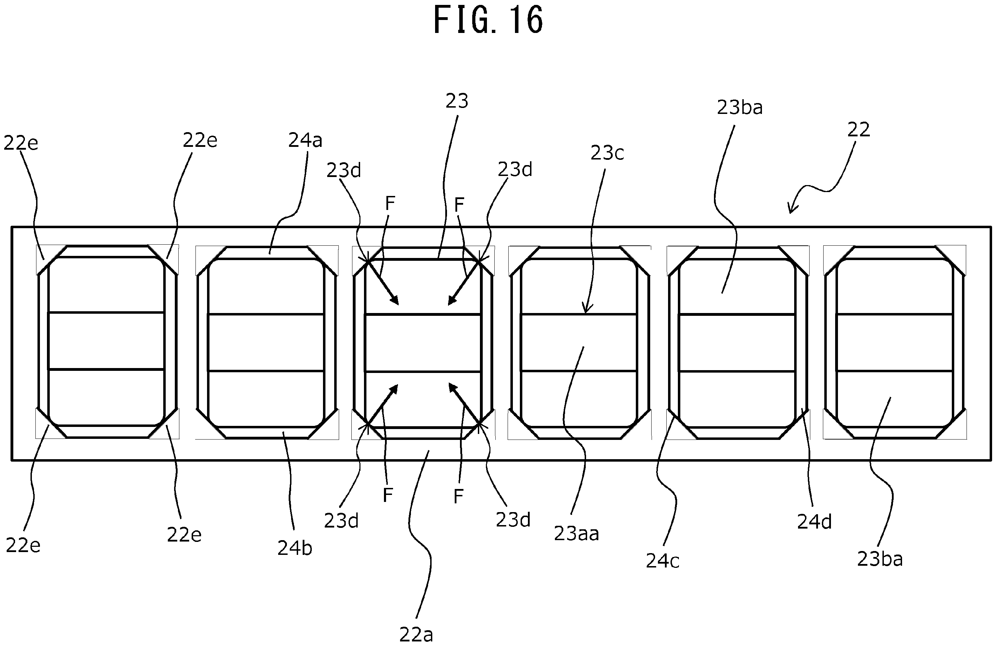

Incidentally, an embodiment of the present invention may be the following mode. For example, while FIG. 8 illustrates an embodiment in which the corners of a plurality of protrusions 22e and the corners of one set of coils 23 are joined to each other, and FIG. 13 illustrates an embodiment in which the surfaces of a plurality of protrusions 22e and the surfaces of one set of coils 23 are joined to each other, there is no limitation to this. For example, as illustrated in FIG. 16, the plurality of protrusions 22e may be formed in a planar shape, and the flat surfaces of the plurality of protrusions 22e and the corners of the one set of coils 23 may be joined to each other. In addition, as illustrated in FIG. 9, the plurality of protrusions 22e having corners in a planar shape may have a longer length L2 in the inner part of the through hole 22c than a length L1 at openings at both ends of the through hole 22c. That is, the length by which the protrusions 22e protrude toward the direction of the center of the through hole 22c may be increased from both ends of the through hole 22c toward the direction of the inner part of the through hole 22c.

### Description of Reference Characters

1: Rotating electric machine
2: Stator (stator)
21: Stator core
21a: Slot
22: Bobbin
22c: Through hole
22ca, 22cb, 22cc, 22cd, 22ce, 22cf: Insertion hole
22d: Partition plate
22e: Projection
22fa, 22fb, 22fc, 22fd: Flat surface
23: Coil
23a: First rectangular wire
23aa: Ridge portion
23b: Second rectangular wire
23ba: Groove portion
23c: Connecting portion
23d: Edge
23e to 23h: Side surface
24, 24a to 24d: Resin

## Claims

1. A rotating electric machine comprising:
a stator core having a slot;
a bobbin fitted in the slot, and having a through hole penetrating in an axial direction of the stator core;
a coil inserted in the through hole;
a plurality of protrusions protruding from at least one of an inner periphery of the through hole and an outer periphery of the coil, and guiding a position of the coil in the through hole; and
a resin filled on a periphery of the coil in the through hole.

2. The rotating electric machine according to claim 1, wherein
the coil is one set of coils having a connecting portion within the bobbin, and
the resin is filled on a periphery of the connecting portion in the through hole.

3. The rotating electric machine according to claim 2, wherein
the plurality of protrusions are at least three protrusions.

4. The rotating electric machine according to claim 3, wherein
the one set of coils is rectangular wires,
the plurality of protrusions are at least four protrusions, and
the at least four protrusions are respectively arranged in the through hole so as to face four respective edges of the one set of coils, the edges extending in the axial direction of the stator core.

5. The rotating electric machine according to claim 3, wherein
the one set of coils is rectangular wires,
the plurality of protrusions are at least four protrusions, and
the at least four protrusions are respectively arranged in the through hole so as to face four respective side surfaces of the one set of coils.

6. The rotating electric machine according to claim 4 or 5, wherein
a plurality of the sets of coils are arranged within the through hole by the one set of coils being plurally arranged along a radial direction of the stator core,
the rotating electric machine further includes a partition plate provided between two sets of coils adjacent to each other in the radial direction of the stator core among the plurality of sets of coils, and
the plurality of protrusions include at least four protrusions arranged on a periphery of each of the plurality of sets of coils.

7. The rotating electric machine according to claim 4, wherein
a plurality of the sets of coils are arranged within the through hole by the one set of coils being plurally arranged along a radial direction of the stator core,
two protrusions among the plurality of protrusions are provided between two sets of coils adjacent to each other in the radial direction of the stator core among the plurality of sets of coils, and
the two protrusions are respectively arranged so as to face two edges adjacent to each other among four edges extending in the axial direction at opposed surfaces of the two sets of coils adjacent to each other in the radial direction of the stator core among the plurality of sets of coils.

8. The rotating electric machine according to claim 4, wherein
the through hole is formed by four or more flat surfaces that are continuous with each other in an inner circumferential direction of the through hole, and
the plurality of protrusions are provided at a corner at which two flat surfaces adjacent to each other among the four or more flat surfaces intersect each other.

9. The rotating electric machine according to claim 4, wherein
the through hole is formed by four or more flat surfaces that are continuous with each other in an inner circumferential direction of the through hole, and
the plurality of protrusions are provided to flat surfaces each facing one of four side surfaces of the one set of coils among the four or more flat surfaces.

10. The rotating electric machine according to claim 6, wherein
the through hole is formed by four or more flat surfaces that are continuous with each other in an inner circumferential direction of the through hole, and
the plurality of protrusions are provided at a corner at which two flat surfaces adjacent to each other among the four or more flat surfaces intersect each other and a corner at which one of the four or more flat surfaces and the partition plate intersect each other.

11. The rotating electric machine according to claim 6, wherein
the through hole is formed by four or more flat surfaces that are continuous with each other in an inner circumferential direction of the through hole, and
the plurality of protrusions are provided to the four or more flat surfaces and the partition plate.

12. The rotating electric machine according to claim 2, wherein
a plurality of the through holes are formed as the through hole in the bobbin,
a plurality of the sets of coils are inserted into the bobbin by the one set of coils being inserted into each of the plurality of through holes, and
the plurality of protrusions protrude from respective inner peripheries of the plurality of through holes or respective outer peripheries of the plurality of sets of coils, and hold respective connecting portions of the plurality of sets of coils at positions separated from the respective inner peripheries of the plurality of through holes.

13. The rotating electric machine according to claim 2, wherein
a length by which each of the plurality of protrusions protrudes toward a direction of a center of the through hole is increased from both ends of the through hole toward a direction of an inner part of the through hole.

14. The rotating electric machine according to claim 1, wherein
an edge of an opening of the through hole is chamfered.

15. An industrial machine comprising the rotating electric machine according to claim 1.
